(19) Europäisches Patentamt
European Patent Office
Office européen des brevets

(11) **EP 2 816 374 B1**

(12) **EUROPEAN PATENT SPECIFICATION**

(45) Date of publication and mention
of the grant of the patent:
**25.05.2016 Bulletin 2016/21**

(51) Int Cl.:
**G01S 19/21** (2010.01)      **G01S 19/22** (2010.01)
**G01S 19/26** (2010.01)      **G01S 19/52** (2010.01)

(21) Application number: **13173075.6**

(22) Date of filing: **20.06.2013**

(54) **Vehicle positioning in high-reflection environments**

Fahrzeugpositionierung in Umgebungen mit hoher Reflexion

Positionnement de véhicule dans des environnements à forte réflexion

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.12.2014 Bulletin 2014/52**

(73) Proprietor: **Intel Corporation**
**Santa Clara, CA 95054 (US)**

(72) Inventors:
• **Fleming, Peter**
**Newbury, RG20 8DN (GB)**
• **Ffoulkes-Jones, Geraint**
**Northampton, NN7 4AD (GB)**
• **Zhang, Qiang**
**Rugby, CV22 7PX (GB)**

(74) Representative: **Viering, Jentschura & Partner mbB**
**Patent- und Rechtsanwälte**
**Am Brauhaus 8**
**01099 Dresden (DE)**

(56) References cited:
**EP-A2- 2 490 042**

• **JUN-ICHI MEGURO ET AL: "Road ortho-image generation based on accurate vehicle trajectory estimation by GPS Doppler", INTELLIGENT VEHICLES SYMPOSIUM (IV), 2012 IEEE, IEEE, 3 June 2012 (2012-06-03), pages 276-281, XP032452923, DOI: 10.1109/IVS.2012.6232132 ISBN: 978-1-4673-2119-8**

## Description

### TECHNICAL FIELD

This invention relates to a positioning system, and in particular to a positioning system for vehicles.

### BACKGROUND

Navigation and positioning systems are in common use, for example using one of the available Global Navigation Satellite Systems (GNSS), such as the Global Positioning System (GPS). In such systems, a user device receives signals from multiple satellite vehicles, each of which has a predetermined trajectory. As a result, the user device is able to make measurements on the received signals, and is able to use these to provide estimates of the user's position and velocity.

One well-known problem with such systems is that signals from the satellite vehicles can arrive at the user device after being reflected off, or refracted by, obstacles that are in the line-of-sight path between the satellite vehicle and the user device or are close to the line-of-sight path. These obstacles can also have the effect that the direct line-of-sight signal is attenuated significantly, possibly to the extent that the user device is practically unable to receive it.

The effect of this problem can be that the user device is unable to make good estimates of the user's position and velocity.

US-7,702,459 describes a positioning system, for use in an environment in which the system may receive multipath signals as a result of reflections. In the described system, GPS measurements are compared with the position and velocity of the device as currently estimated based on earlier GPS measurements. Measurements that are inconsistent with the current estimate (for example because they are based on reflected signals) can be regarded as outliers, and disregarded when generating the next estimate of the position and velocity of the device. This assumes that the system can have no knowledge of the potential obstacles, and hence of the effects of reflection on the received signals.

Jun-Ichi Meguro et al: "Road ortho-image generation based on accurate vehicle trajectory estimation by GPS Doppler", Intelligent Vehicles Symposium (IV), 2012, IEEE, IEEE, 3 June 2012, pages 276-281, describes vehicle trajectory estimation using GPS Doppler, for road image mosaicking. Accurate trajectory and heading angle estimation are realized by integrating GPS Doppler and yaw-rate gyro.

### SUMMARY

According to one aspect of the present invention, there is provided a method of operation of a positioning system. An estimate is obtained of the heading, relative to respective ones of a plurality of transmitters, of a body whose position or velocity is to be estimated. Respective signals from a plurality of transmitters are tracked, and a respective Doppler measurement is obtained from each of said tracked signals. For each of the tracked signals, a speed of the body in the direction of its heading is estimated using the estimate of the heading of the body and the respective Doppler measurement, and it is determined whether the estimated speed of the body is consistent with the signal having been received along a direct path from the transmitter. Signals that provide information about the speed of the body that is inconsistent with the signal having been received along a direct path from the transmitter, are then disregarded when estimating the position or velocity of the body.

The method may include determining whether the estimated speed of the body is consistent with the signal having been received along a direct path from the transmitter by determining whether the estimated speed of the body suggests that the respective signal was obtained from the transmitter via a reflection.

The method may include determining whether the estimated speed of the body is consistent with the signal having been received along a direct path from the transmitter by comparing the estimated speed of the body in the direction of said estimated heading with a threshold speed. The threshold speed may be zero, such that it is determined that the estimated speed of the body is not consistent with the signal having been received along a direct path from the transmitter if the estimated speed of the body in the direction of said estimated heading is negative.

The threshold speed may be adaptable, based on an angle between the estimated heading of the body whose position or velocity is to be estimated and the direct path from the transmitter. The estimate of the heading of the body may be based on a signal received from a heading sensor provided on the body.

The signal from the heading sensor may further comprise information about the speed of the body, and wherein the method comprises determining whether the estimated speed of the body obtained using the estimate of the heading of the body and the respective Doppler measurement is consistent with the signal having been received along a direct path from the transmitter by comparing said estimated speed of said body obtained using the estimate of the heading of the body and the respective Doppler measurement with the information about the speed of the body obtained from the heading sensor.

The estimate of the heading of the body may be obtained immediately after determining that the body has started moving after being determined to be stationary.

The method may further comprise preventing future tracking of disregarded signals.

Measurements from the signals that are not disregarded may be used to update a position/velocity/time solution for the body.

The heading sensor may comprise a gyroscope, having a known positional relationship to the body, for indicating an orientation of the body, and may then further comprise a temperature sensor, for calibrating an output of the gyroscope.

The heading sensor may comprise an accelerometer or a magnetometer, for indicating a direction of motion of the body.

According to a second aspect of the invention, there is provided a positioning system, having a heading sensor, for generating an estimate of the heading of a body whose position or velocity is to be estimated, and a receiver, for detecting signals from a plurality of transmitters. The system also includes a processor, for performing a method according to the first aspect of the invention.

## BRIEF DESCRIPTION OF THE DRAWINGS

Preferred embodiments will now be described, by way of example only, with reference to the accompanying drawings, in which:-

Figure 1 is a schematic block diagram of an electronic device including a navigation and positioning system.

Figure 2 illustrates a possible deployment of the system of Figure 1.

Figure 3 illustrates the effects of reflection on a signal received by the navigation and positioning system in one special case.

Figure 4 illustrates the effects of reflection on a signal received by the navigation and positioning system in a more general case.

Figure 5 illustrates further effects of reflection on a signal received by the navigation and positioning system.

Figure 6 is a flow diagram illustrating a method performed by the navigation and positioning system.

## DETAILED DESCRIPTION

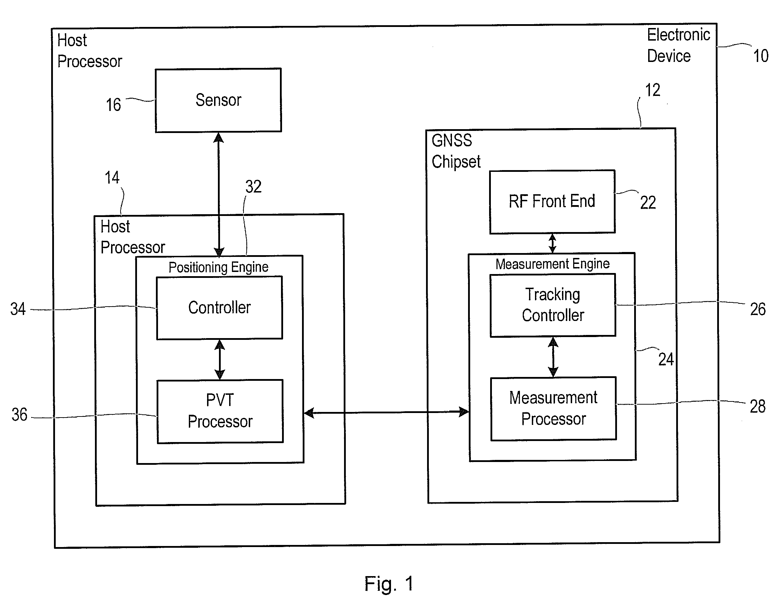

Figure 1 illustrates a navigation and positioning system provided in an electronic device 10. As an example, the electronic device 10 might be a smartphone, tablet or notebook computer or the like. As another example, the electronic device 10 might be a specialised satellite navigation device provided with means for mounting to a vehicle.

The navigation and positioning system is shown in Figure 1 as being divided between multiple separate processing devices. In one example, the electronic device 10 includes a Global Navigation Satellite System (GNSS), for example a Global Positioning System (GPS) chipset 12 and a host processor 14 that is also used to provide other required functionality of the electronic device 10. However, it is also possible that all of the processing can be provided in a single integrated circuit.

The electronic device 10 also includes at least one additional sensor 16, as described in more detail below.

The GNSS chipset 12 includes a radio frequency (RF) front end circuit 22, for receiving signals transmitted by satellite vehicles. Received signals are passed to software in the form of a measurement engine 24, which can be thought of as comprising a tracking controller 26 and a measurement processor 28. The tracking controller 26 controls the operation of the RF front end circuit so that it receives the intended signals from the satellite vehicles, and the measurements required for determining the position and velocity of the device are extracted by the measurement processor 28.

The host processor 14 runs software in the form of a positioning engine 32, which includes a controller 34 and a position-velocity-time (PVT) processor 36. The controller 34 coordinates the positioning engine 32 and the measurement engine 24, while the PVT processor 36 calculates an estimate of the position and velocity of the device, and the time, using the measurements received from the GNSS chipset 12 and from the additional sensor 16. While the invention is described herein with reference to its use in a GNSS satellite navigation and positioning system, it can equally be used in other systems in which a device receives signals from transmitters whose position (and velocity, if appropriate) is known. For example, such transmitters might take the form of GNSS pseudolites, Indoor Messaging System (IMES) transmitters, Bluetooth transmitters, WiFi transmitters, cellular wireless transmitters, or near field communication (NFC) transmitters.

As is generally understood, the RF front end circuit 22 is controlled so that it receives signals from multiple transmitters, such as satellite vehicles in the illustrated example. Measurements are extracted from these signals by the measurement engine 24, and supplied to the positioning engine 32, which then calculates an estimate of the position and velocity of the device, and the time.

Typically, the measurements relate to the times at which signals are received by the receiver. If the receiver has a clock that is known to be completely synchronised to the satellites' time, the time at which a signal is received will indicate the distance of the receiver from the satellite vehicle, i.e. the range. By obtaining range measurements from three or more satellite vehicles, the position of the receiver can be calculated. In practice, most navigation devices do not have such a clock, and so the time offset is one of the parameters that is sought to be calculated, by using additional measurements relating to the times at which signals are received. Range measurements computed using an un-synchronised receiver clock are referred to as pseudoranges. Typically, pseudorange measurements from four or more satellite vehicles are used to calculate the three-dimensional position of the receiver together with the receiver clock time offset.

The measurements may also relate to the phase of the carrier wave of each signal received from a satellite. This provides additional information that can be used when calculating the position and velocity of the device, and the time.

The movement of the device 10 causes Doppler effects in the signals received by the receiver. That is, the frequency of received signals can be compared with the frequency of a local oscillator in the RF front end circuit 22. The apparent frequency of the received signals is shifted by an amount that depends on the component of the speed of movement of the device towards or away from the satellite. It also depends on the error of the frequency of the local oscillator relative to the satellites' time-frame. The effect of the local oscillator's frequency error on the Doppler measurements is analogous to the effect of the receiver's time offset on the range measurements. However, the Doppler measurements are usually still referred to as 'Doppler' rather than 'pseudo-Doppler'. The Doppler measurements can be used to calculate the velocity of the movement of the device 10. Typically, Doppler measurements from four or more satellite vehicles are used to calculate the three-dimensional velocity of the receiver together with the receiver clock frequency offset. It is also possible to use repeated Doppler measurements to determine the position of the device 10. For example, if the Doppler measurements at one time are used to calculate the velocity of the device 10, this can be used to estimate the movement of the device in the period until the next Doppler measurements are taken, and successive repetitions of this process can be used to obtain an estimate of the path followed by the device.

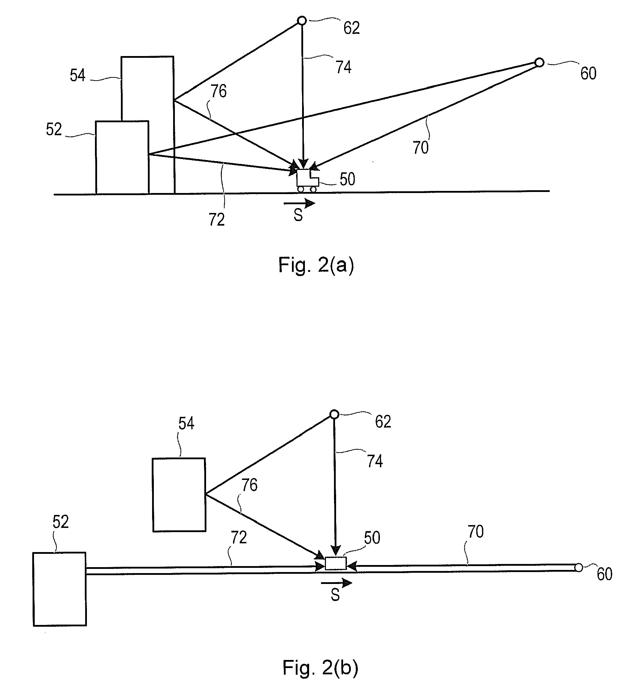

Figure 2 illustrates a situation in which the electronic device 10 may be used.

Specifically, Figure 2(a) is a side view of a vehicle 50 moving at a speed S in an urban environment containing buildings 52, 54, while Figure 2(b) is a view from above. It is assumed here that the vehicle 50 contains an electronic device 10 of the type shown in Figure 1. For some purposes, as described in more detail below, it is useful to assume that the electronic device 10 is fixed to the vehicle 50 in such a way that its orientation relative to the vehicle will generally stay the same as the vehicle is moving. Figure 2 shows the user 50 being in a position to receive signals from two satellite vehicles 60, 62. It will be recognised that it is usually necessary to receive signals from at least four satellite vehicles in order to be able to obtain an accurate estimate of the position and velocity of the device, and the receiver clock time and frequency offsets, but only two satellite vehicles are shown in Figure 2 for reasons of clarity, and because this is sufficient to illustrate the operation of the invention.

Figure 2 shows a line-of-sight signal 70 being received by the vehicle 50 from the first satellite vehicle 60, and also shows a signal 72 being received by the vehicle 50 from the first satellite vehicle 60 after reflection off the building 52. Figure 2 also shows a line-of-sight signal 74 being received by the vehicle 50 from the second satellite vehicle 62, and also shows a signal 76 being received by the vehicle 50 from the second satellite vehicle 62 after reflection off the building 54.

As mentioned above, the vehicle 50 is moving at a speed S, in a direction that is on the straight line between the building 52 and the first satellite vehicle 62, towards the first satellite vehicle 62.

The movement of the vehicle 50 causes Doppler effects on the signals received by the GNSS chipset 12, and these effects can be used to generate Doppler measurements. A Doppler measurement is taken in general terms to mean a rate of change of the pseudorange of the user from the satellite vehicle. This discussion assumes that the Doppler effects caused by movement of the satellite vehicle have been removed. However, it is assumed that each Doppler measurement will still be subject to error caused by an offset in the frequency of the signals generated by the oscillator in the RF front end circuit of the GNSS chipset.

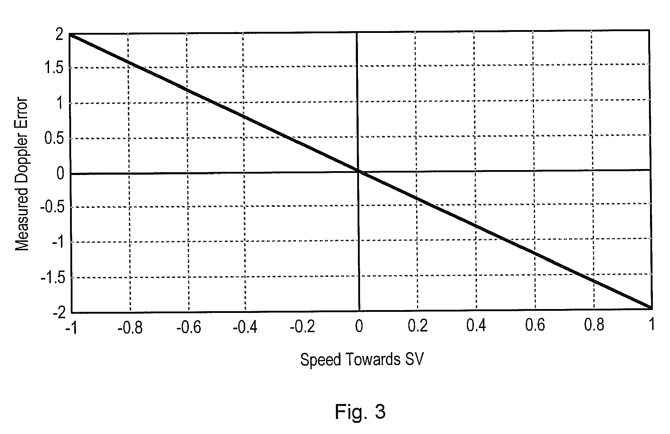

Figure 3 illustrates the effect of multipath on the Doppler measurements in a special case. Specifically, Figure 3 illustrates the error in the Doppler measurements that can be obtained by the vehicle 50 from the first satellite vehicle 60 in the situation shown in Figure 2.

As described above, Figure 2 shows a situation in which the vehicle 50 is moving with speed S along the straight line that extends between the satellite vehicle 60 and the reflector 52. (In this illustration, a positive value of S represents movement towards the satellite vehicle 60, while a negative value of S represents movement away from the satellite vehicle 60 towards the building 52 that is reflecting the signal.) The Doppler measurements relate to the change in the distance travelled by the signal between successive measurements.

Therefore, when the vehicle 50 is moving towards the satellite vehicle 60, that is, to the right in Figure 2, the real distance between the vehicle 50 and the first satellite vehicle 60 is reducing. However, the distance travelled by the reflected signal 72 is increasing, which would normally suggest that the vehicle 50 is moving away from the satellite vehicle 60. More specifically, when the vehicle 50 is moving towards the satellite vehicle 60 at the speed S, the Doppler measurement indicates that the vehicle 50 is moving away from the satellite vehicle 60 at the speed S. There is thus an error in the sign of the velocity obtained from the Doppler measurement, and an error of 2S in the magnitude of the velocity obtained from the Doppler measurement.

Figure 3 illustrates this situation graphically, for speeds (expressed in suitable units) in the range from -1 to +1. For any given speed, the error in the velocity obtained from the Doppler measurement is of the opposite sign and has a magnitude of twice the speed.

Figure 3 applies to the special case in which the vehicle 50 is moving along the straight line that extends between the satellite vehicle 60 and the reflector 52. In the more general case, the position of the reflector will not be known.

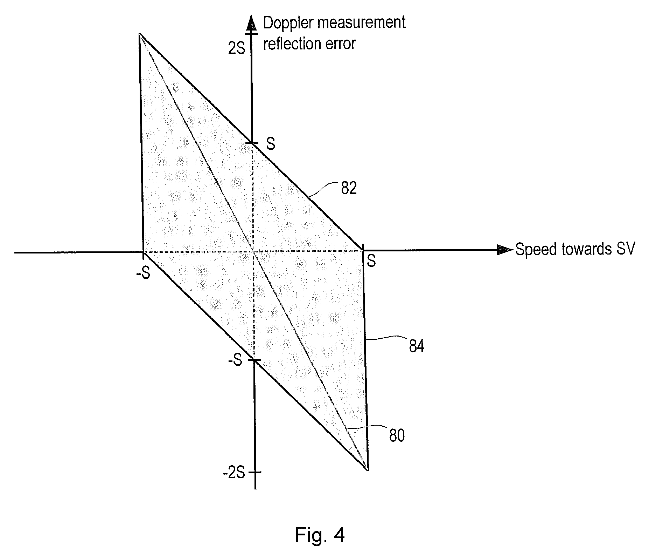

Figure 4 illustrates the error in the velocity that may be obtained from the Doppler measurement in a more general situation.

Figure 4 assumes that the electronic device 10 includes at least one additional sensor 16 that can be used to estimate the speed of the vehicle 50. The additional sensor may include an accelerometer, and may additionally include a gyroscope and/or a magnetometer. Thus, the speed of the vehicle 50 can be estimated.

Thus Figure 4 shows a situation in which the vehicle is known to be moving with a speed S, but the direction of motion of the vehicle is not assumed to be known. Specifically, no assumption is made about the direction of movement of the vehicle relative to the position of the satellite vehicle, or about the position of the reflector relative to the line-of-sight between the satellite vehicle and the vehicle. (For the purposes of illustration, this corresponds to the situation in Figure 2(b), in which the vehicle is receiving the reflected signal 76 from the second satellite vehicle 62.) This also applies to the cases where the reflector is three-dimensional, and/or has a curved surface.

In Figure 4, the horizontal axis represents the component of the velocity of the vehicle in the direction towards a satellite vehicle from which a reflected signal is being received. Thus, if the vehicle is travelling at the speed S towards the satellite vehicle, this represents a velocity of +S, while if the vehicle is travelling at the speed S directly away from the satellite vehicle, this represents a velocity of -S. Movement in other directions will represent intermediate velocities. For example, if the vehicle is travelling at the speed S in a direction that is perpendicular to the direction of the satellite vehicle, its velocity in the direction towards the satellite vehicle will be zero.

In Figure 4, the vertical axis represents the error in the Doppler measurement caused by the reflection. The Doppler measurement is assumed to be indicating the change in the vehicle's position relative to the satellite vehicle. However, when it is the reflected signal that is being tracked, the Doppler measurement is actually indicating the change in the vehicle's position relative to the reflector. Thus, an error is caused by the fact that the movement of the vehicle causes a change in the vehicle's position relative to the reflector that is different from the change in the vehicle's position relative to the satellite vehicle.

Figure 4 shows the range of possible errors, for different directions of travel of the vehicle, and for different positions of the reflector. For example, the line 80 corresponds to the special case illustrated in Figure 3, in which the vehicle is positioned directly between the satellite vehicle and the reflector, and there is thus an error in the sign of the velocity obtained from the Doppler measurement, and an error in the magnitude of the velocity obtained from the Doppler measurement, with the magnitude of the error being equal to twice the component of the velocity in the direction towards the satellite vehicle.

As another example, the line 82 corresponds to the range of cases in which the vehicle is moving directly towards the reflector, and thus the vehicle's speed has a component (in the range from 0 to S) in the direction towards the satellite vehicle, but has a speed of S in the direction towards the reflector, and so the Doppler measurement overestimates the vehicle's velocity.

As a further example, the line 84 corresponds to the cases in which the vehicle is moving directly towards the satellite vehicle (and therefore has a speed S in that direction), for different positions of the reflector. Thus, a reflector directly "behind" the vehicle (as seen from the satellite vehicle) causes an error of -2S in the Doppler measurement, while a reflector that is directly adjacent to the line-of-sight path between the satellite vehicle and the vehicle causes a very small error in the Doppler measurement.

It is important for the purposes of the method described herein to recognise that, when the vehicle's speed is zero, the presence of a reflector causes no error in the Doppler measurement. (This is ignoring the small effects due to the change in geometry of the satellite-reflector-receiver resulting from the motion of the satellite.) It is also important to recognise that, regardless of the vehicle's direction of movement, and regardless of the shape and position of the reflector, the error in the Doppler measurement lies within the shaded parallelogram in Figure 4.

In one embodiment of the present invention, it is assumed that the electronic device 10 is mounted to the vehicle 50 in a generally fixed orientation. It may also be assumed that the direction of motion of the vehicle will generally be either substantially forwards or substantially backwards, with sideways movement being impossible.

Thus, the at least one additional sensor 16 can be used to estimate the direction of motion of the vehicle 50, and thus acts as a heading sensor. The additional sensor may include an accelerometer, and may additionally include a gyroscope and/or a magnetometer. The additional sensor may therefore be used to provide an estimate of the speed of the vehicle 50.

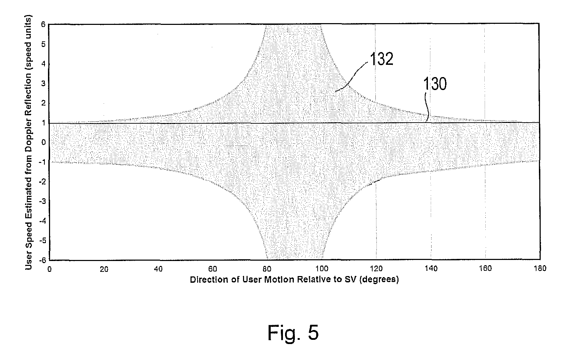

Figure 5 illustrates the effect of using a Doppler measurement, derived from a reflected signal, to estimate the speed of the vehicle, where we are assuming all other errors affecting the Doppler measurement are zero and we are assuming the receiver clock's frequency offset to be zero. In Figure 5, the horizontal axis represents the direction of movement of the vehicle, relative to the satellite vehicle, with 0° representing movement directly towards the satellite vehicle and 180° representing movement directly away from the satellite vehicle. The effect is symmetrical about the line-of-sight, and so Figure 5 only shows the effect for directions between 0° and 180°, as directions between 180° and 360° produce the same effects. In Figure 5, the vertical axis represents the user speed that can be estimated based on a Doppler measurement, depending on the position of the reflector. Figure 5 presents a slightly simplified analysis by considering the case of a satellite vehicle that is at very low elevation, and by assuming that we know that the vertical speed of the vehicle is zero.

In Figure 5, the user's speed is taken to be one unit, as shown by the line 130. In this situation, the shaded region 132 indicates the range of speeds that can be derived from a single Doppler measurement for a given direction of movement of the vehicle, depending on the reflector position.

Thus, as described previously, if the vehicle is moving directly towards the satellite vehicle (that is, at a position of 0° on the horizontal axis), and there is a reflector directly "behind" the vehicle (as seen from the satellite vehicle) the Doppler measurement will result in an estimated speed of -1 unit, while a reflector that is directly adjacent to the line-of-sight path between the satellite vehicle and the vehicle will result in only a very small error in the Doppler measurement. Reflectors in other positions will result in estimated speeds in the range from -1 to +1 unit.

For other directions of movement of the vehicle (that is, at other positions on the horizontal axis), the use of a reflected signal can cause an even larger error in the estimated speed. In particular, when the vehicle is travelling in a direction that is at 90° to its line-of-sight path to the satellite vehicle, the use of a single Doppler measurement obtained from a reflected signal can produce an estimated speed that tends towards infinity, for certain reflector positions.

However, it will be noted that, in most cases, the speed estimate will be negative, or its magnitude will be under-estimated. Thus, if a reflected signal is used to estimate the speed of the user, and this estimate is used in turn to estimate the position of the moving user, this has the effect that the user appears to be "pushed back", i.e. appears to have travelled a shorter distance than is really the case, either because the estimated magnitude of the speed is lower than the true value or because the direction of motion is reversed.

It will be noted in particular that, for many reflector positions, the speed that is estimated using a Doppler measurement obtained from a reflected signal is negative (i.e. it is in the opposite direction to the actual direction of movement of the vehicle). Thus, if the actual direction of movement of the vehicle is known, for example from a separate heading sensor provided on the vehicle, then it is easily recognised that the speed that is estimated using such a Doppler measurement is inconsistent with the known direction of movement. Thus, it can be determined from Figure 5 that the Doppler measurement was probably obtained from a reflected signal.

If a separate speed sensor is also provided on the vehicle, then it is possible to identify other situations (corresponding to a wider range of reflector positions) in which it can be recognised that the speed that is estimated using a single Doppler measurement is inconsistent with the speed estimated from the additional sensor. In such situations, it can be determined from Figure 5 that the Doppler measurement was probably obtained from a reflected signal.

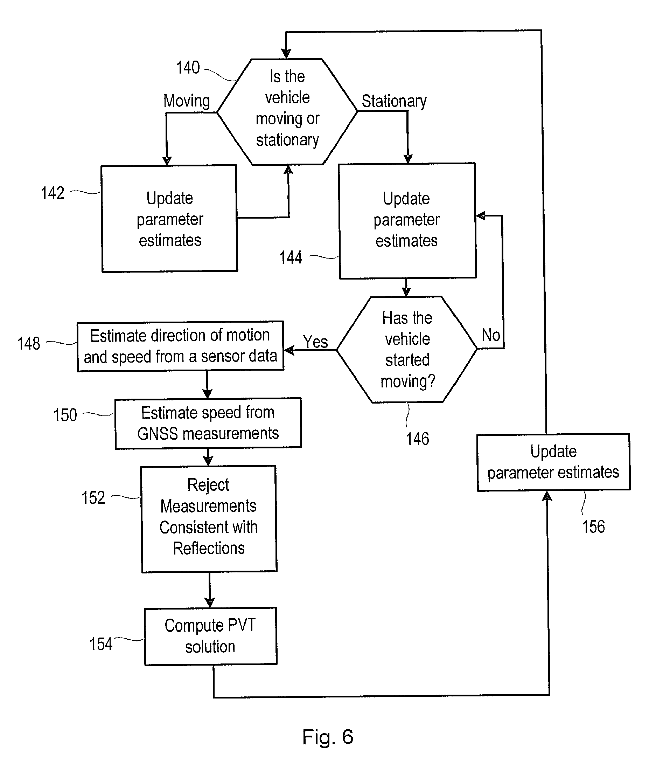

Figure 6 is a flow chart, illustrating a method in accordance with an embodiment of the invention. The process shown in Figure 6 can be split between a measurement engine and a positioning engine, or can be performed in a single device, or can be split between different devices in different ways. For example, the process shown in Figure 6 can be performed largely in the positioning engine, with the measurement engine simply providing the required measurements to the positioning engine, under the control of the positioning engine.

The process starts in step 140 in which it is determined whether the vehicle is moving or stationary. This determination can be based on GNSS measurements and/or signals received from additional sensors such as a gyroscope, an accelerometer, or a magnetometer.

If it is determined that the vehicle is moving, the GNSS measurements and the gyroscope signals are combined in a sequential estimation process to provide estimates of the vehicle heading. If the sensors include an accelerometer, then the signals received therefrom can also be used in that estimation process. The measurements are also used in step 142 to update various functional or calibration parameters. For example, the sensors may also include a temperature sensor, in which case temperature measurements can be used in order to improve estimates of the coefficients of a temperature-dependent model of the gyroscope 'zero-level' offset, and the coefficients of a temperature-dependent model of the GNSS oscillator frequency offset.

More specifically, a gyroscope might produce an output signal that varies with temperature, and one way (out of many) in which this can be modelled is:

$$Rt = (G - A0 - A1*T) * S + e$$

Where

Rt is the true rotation rate,
G is the gyroscope output,
T is the temperature ,
S is a scale factor,
e is the residual error, and
A0 and A1 are calibration coefficients.

By measuring the gyroscope output value at different temperatures, it is possible to obtain values for the coefficients A0 and A1, so that more accurate values can be obtained for the true rotation rate on subsequent measurement occasions.

Similarly, an oscillator in the RF front end circuit might produce an output signal at a frequency that varies with temperature, and one way (out of many) in which this can be modelled is:

$$Ft = Fa + B0 + B1*T + e$$

Where

Ft is the true frequency,
Fa is the nominal frequency,
T is the temperature ,
e is the residual error, and
B0 and B1 are calibration coefficients.

By comparing the output frequency value with the frequency of received signals at different temperatures, it is possible to obtain values for the coefficients B0 and B1, so that more accurate values can be obtained for the true frequency on subsequent measurement occasions.

Thus, while the vehicle is moving, the GNSS and sensor measurements are combined in such a way as to calibrate the gyroscope relative to the vehicle. That is, parameters are estimated such that the data from the gyroscope alone can be used to estimate the heading of the vehicle. More specifically, the system learns which gyroscope signals are associated with movement of the vehicle. As discussed above, it will usually be the case that the vehicle will be travelling either forwards or backwards relative to its own axis, with a relatively small sideways component of movement. It will not necessarily be known initially how the device 10 is mounted in or on the vehicle, and so the output of the gyroscope will not initially be associated with movement in any particular direction of the vehicle, but this will become possible after such calibration.

If it is determined in step 140 that the vehicle is stationary, the process passes to step 144, in which 'snapshot' calibrations of the gyroscope zero-level offset and GNSS oscillator frequency offset are performed, making use of this 'zero velocity' knowledge.

Thus, by measuring the gyroscope output value at times when the true rotation rate is known to be zero, it is possible to obtain values for the coefficients A0 and A1 as defined above, so that more accurate values can be obtained for the true rotation rate on subsequent measurement occasions.

Similarly, by comparing the output frequency value with the known frequency of received signals at times when the vehicle is known to be stationary and so there is no Doppler error, it is possible to obtain values for the coefficients B0 and B1, so that more accurate values can be obtained for the true frequency on subsequent measurement occasions.

After this calibration, the process passes to step 146, in which it is determined whether the vehicle has started moving. If not, the process repeats step 144, until movement is detected, and the process passes to step 148.

In step 148, data from the gyroscope, or other heading sensor such as a magnetometer, together with estimates from a previous update of the vehicle heading and the various functional or calibration parameters, are used to predict the vehicle heading at the current time. The vehicle speed may also be estimated from the accelerometer data.

In addition, either at the same time or separately, the GNSS and (optionally) the temperature data, together with estimates from a previous update of the various functional or calibration parameters, are used to predict the GNSS oscillator frequency offset at the current time. The estimates from the previous update may be the estimates from the most recent stationary snapshot calibration performed in step 144, but other implementations are possible.

Thus, at the current update time, estimates of the user heading, clock drift and, optionally, speed are made, and these estimates are independent of, or only weakly-dependent on, the current GNSS measurements.

The process then passes to step 150, in which the latest GNSS measurements are considered. For example, these measurements might be sent from the measurement engine to the positioning engine in the case where the processing is split between these two modules.

As will be apparent, the RF front end will be receiving signals from multiple satellite vehicles. Where reflections are a factor, the RF front end will be receiving more than one signal from at least some satellite vehicles. Each signal can be used to generate a Doppler measurement.

As discussed previously, the Doppler measurements are affected by the error in the assumed frequency of the receiver's oscillator. By examining the frequencies of signals received when the receiver is known to be stationary, the frequency of the local oscillator signal can be calibrated. Then, any difference between the known frequency of the local oscillator and the frequency of a signal that is received when the receiver is known to be moving can be assumed to be due to that movement. Thus, the Doppler measurement can be used to estimate the component of the speed of the vehicle in the direction of the satellite vehicle in the horizontal plane, assuming any vertical velocity of the vehicle to be small. This can then be combined with knowledge of the direction of heading of the user relative to the direction of the satellite, in order to generate an estimate of the speed of the user in the direction of its heading. It will be recognised that such an estimate of the speed is unlikely to be particularly accurate, because of the effect of errors in the Doppler measurement. It will also be recognised that the accuracy of such an estimate of the speed will be highly dependent on the direction of heading of the user relative to the direction of the satellite. However, it is stressed that this estimation is not the final estimation of the speed of the receiver. Rather, it is part of a means of deciding which measurements are likely to have been derived from reflected signals, so that such measurements can be excluded from the subsequent, final, estimation of the receiver's position and velocity.

The process then passes to step 152, in which each of these individual estimates of the vehicle speed is examined to determine whether or not it is consistent with the satellite signal having been reflected. For example, this may simply involve determining whether or not the speed estimate is negative. That is, the speed estimate is compared with the direction of motion obtained in step 148. If it is found that the speed estimate derived from the Doppler measurement has a component towards the satellite vehicle when the direction of motion found in step 148 has a component away from the satellite vehicle (or vice versa), it is determined that that measurement is likely to have been derived from a reflected signal.

More generally, the examination of each individual estimate of the vehicle speed might involve comparing that estimate with a threshold.

Thus, the test is whether

$$ S < x $$

Where:

S is the estimate of the vehicle speed obtained from a single Doppler measurement, based on a measured heading of the user relative to the direction of the satellite, and x is a threshold value.

In one example mentioned above, the threshold value x may be set to zero, such that the individual estimate of the vehicle speed is determined to be consistent with the satellite signal having been reflected when the speed estimate is negative.

In another example, the threshold value x may be set to a negative constant, such that the individual estimate of the vehicle speed is determined to be consistent with the satellite signal having been reflected when the speed estimate is more negative than that constant.

In a further example, the threshold value x may be set to the sum of a negative constant and a value representing the measurement uncertainty, such that the threshold is adapted based on the expected accuracy of the measurement.

As a further example, the threshold value x may be adapted to take account of the fact that, when the vehicle is moving with a heading that is close to perpendicular to its direction to the satellite, the estimate of the speed of the vehicle is likely to be of relatively poor quality.

This can be used to set the threshold to alter (either increasing or decreasing) the likelihood that the estimate of the vehicle speed is determined to be consistent with the satellite signal having been reflected.

If it is found that the Doppler measurement derived from a particular signal is inconsistent with having been received along a direct path from the satellite (i.e. it is more consistent with having been received along a reflected path), then that particular Doppler measurement is flagged for rejection from all subsequent processing.

Specifically, the Doppler measurement is disregarded in the subsequent step 154, when computing the position and velocity of the vehicle, and possibly also computing the time (i.e. the components of the PVT solution). The computing step is generally conventional, and combines measurements obtained from multiple received signals in order to arrive at an estimate of the position and/or speed of the vehicle, but disregards the measurements obtained from a signal that is determined likely to have been reflected.

In addition, the pseudorange measurement obtained from the same signal may also be disregarded. Further, the positioning engine may instruct the measurement engine to cease tracking that signal, so no further measurements are derived from the reflected signal.

Thus, a reflection-focused outlier rejection process is executed. It is known to reject outlier measurements when computing a PVT solution using GNSS measurements as well as sensor inputs, etc. This known process typically considers a group of measurements received at one time, and assumes that only a small proportion of these measurements will be in error. It therefore assumes that an erroneous measurement can be recognised by being inconsistent with the other measurements. In the outlier rejection process described here, each GNSS measurement is considered in isolation from the other GNSS measurements, to determine whether it is consistent with information obtained from other sources, in particular from a heading sensor. If the measurement passes this test, it is then used in the computation of the PVT solution, it being recognised that this computation may include further outlier rejection steps.

The process shown in Figure 6 then passes to step 156, in which the parameter estimates are updated, in the same manner as described with reference to step 144, taking account of the computed PVT solution.

There is thus described a process that allows the position and/or velocity of a user to be determined with greater precision, in particular in the case of a vehicle in an environment in which GNSS signals are highly prone to the effects of reflection from buildings etc.

**Claims**

1. A method of operation of a positioning system, the method comprising:

obtaining an estimate of the heading, relative to respective ones of a plurality of transmitters, of a body (50) whose position or velocity is to be estimated (148);

tracking respective signals (70, 72, 74, 76) from the plurality of transmitters (60, 62);

obtaining a respective Doppler measurement from each of said tracked signals (70, 72, 74, 76);

for each of said tracked signals (70, 72, 74, 76), estimating a speed of said body in the direction of its heading using the estimate of the heading of the body (50) and the respective Doppler measurement (150), and determining whether the estimated speed of the body (50) is consistent with the signal having been received along a direct path from the transmitter (60, 62); and disregarding signals that provide information about the speed of the body (50) that is inconsistent with the signal having been received (152) along a direct path from the transmitter (60, 62), when estimating the position or velocity of the body (50).

2. A method as claimed in claim 1,
   wherein the determining whether the estimated speed of the body (50) is consistent with the signal having been received (152) along a direct path from the transmitter (60, 62) comprises determining whether the estimated speed of the body suggests that the respective signal was obtained from the transmitter (60, 62) via a reflection.

3. A method as claimed in claim 1 or 2,
   wherein the determining whether the estimated speed of the body (50) is consistent with the signal having been received (152) along a direct path from the transmitter (60, 62) comprises comparing the estimated speed of the body (50) in the direction of said estimated heading with a threshold speed.

4. A method as claimed in claim 3, wherein the threshold speed is zero, such that it is determined that the estimated speed of the body (50) is not consistent with the signal having been received along a direct path from the transmitter (60, 62) if the estimated speed of the body (50) in the direction of said estimated heading is negative.

5. A method as claimed in claim 3, wherein the threshold speed is adaptable, based on an angle between the estimated heading of the body (50) whose position or velocity is to be estimated and the direct path from the transmitter.

6. A method as claimed in any preceding claim, wherein the estimate of the heading of the body (50) is based on a signal received from a heading sensor provided on the body (50).

7. A method as claimed in claim 6, wherein the signal from the heading sensor further comprises information about the speed of the body (50), and wherein the method comprises determining whether the estimated speed of the body (50) obtained using the estimate of the heading of the body (50) and the respective Doppler measurement is consistent with the signal having been received along a direct path from the transmitter (60, 62) by comparing said estimated speed of said body (50) obtained using the estimate of the heading of the body (50) and the respective Doppler measurement with the information about the speed of the body (50) obtained from the heading sensor.

8. A method as claimed in any preceding claim, comprising obtaining the estimate of the heading of the body (50) immediately after determining that the body (50) has started moving after being determined to be stationary.

9. A method as claimed in any preceding claim, further comprising:

   preventing future tracking of disregarded signals.

10. A method as claimed in any preceding claim, further comprising:

    using measurements from the signals that are not disregarded to update a position/velocity/time solution for the body (50).

11. A method as claimed in any preceding claim, wherein the heading sensor comprises a gyroscope, having a known positional relationship to the body (50), for indicating an orientation of the body (50).

12. A method as claimed in claim 11, wherein the heading sensor further comprises a temperature sensor, for calibrating an output of the gyroscope.

13. A method as claimed in claim 10 or 11, further comprising an accelerometer, for indicating a direction of motion of the body (50).

14. A method as claimed in any of claims 1 to 10, wherein the heading sensor comprises a magnetometer, for indicating a direction of motion of the body (50).

15. A positioning system, comprising:

    a heading sensor (16), for generating an estimate of the heading of a body (50) whose position or velocity is to be estimated;

a receiver (22), for detecting signals from a plurality of transmitters (60, 62); and
a processor (28, 36), configured to perform a method as defined in any of claims 1 to 14.

**Patentansprüche**

1. Verfahren zum Betreiben eines Positionierungssystems, wobei das Verfahren Folgendes umfasst:

   Erhalten eines Schätzwerts des Kurses, relativ zu jeweiligen einzelnen von mehreren Sendern, eines Körpers (50), dessen Position oder Geschwindigkeit geschätzt werden soll (148);
   Verfolgen jeweiliger Signale (70, 72, 74, 76) von den mehreren Sendern (60,62);
   Erhalten einer jeweiligen Doppler-Messung von jedem der verfolgten Signale (70, 72, 74, 76);
   für jedes der verfolgten Signale (70, 72, 74, 76), Schätzen einer Geschwindigkeit des Körpers in der Richtung seines Kurses unter Verwendung des Schätzwerts des Kurses des Körpers (50) und der jeweiligen Doppler-Messung (150) und Bestimmen, ob die geschätzte Geschwindigkeit des Körpers (50) mit dem Signal übereinstimmt, das entlang eines direkten Wegs vom Sender (60, 62) empfangen worden ist; und
   Ignorieren von Signalen, die Informationen über die Geschwindigkeit des Körpers (50) liefern, die mit dem Signal nicht übereinstimmen, das entlang eines direkten Wegs von dem Sender (60, 62) empfangen worden ist, wenn die Position oder Geschwindigkeit des Körpers (50) geschätzt wird.

2. Verfahren nach Anspruch 1,
   wobei das Bestimmen, ob die geschätzte Geschwindigkeit des Körpers (50) mit dem Signal übereinstimmt, das entlang eines direkten Wegs vom Sender (60, 62) empfangen worden ist (152), das Bestimmen umfasst, ob die geschätzte Geschwindigkeit des Körpers nahelegt, dass das jeweilige Signal über eine Reflexion von dem Sender (60, 62) erhalten worden ist.

3. Verfahren nach Anspruch 1 oder 2,
   wobei das Bestimmen, ob die geschätzte Geschwindigkeit des Körpers (50) mit dem Signal übereinstimmt, das entlang eines direkten Wegs vom Sender (60, 62) empfangen worden ist (152), das Vergleichen der geschätzten Geschwindigkeit des Körpers (50) in der Richtung des geschätzten Kurses mit einer Schwellwertgeschwindigkeit umfasst.

4. Verfahren nach Anspruch 3, wobei die Schwellwertgeschwindigkeit null beträgt, und zwar so, dass bestimmt wird, dass die geschätzte Geschwindigkeit des Körpers (50) nicht mit dem Signal übereinstimmt, das entlang eines direkten Wegs vom Sender (60, 62) empfangen worden ist, falls die geschätzte Geschwindigkeit des Körpers (50) in der Richtung des geschätzten Kurses negativ ist.

5. Verfahren nach Anspruch 3, wobei die Schwellwertgeschwindigkeit auf der Basis eines Winkels zwischen dem geschätzten Kurs des Körpers (50), dessen Position oder Geschwindigkeit geschätzt werden soll, und dem direkten Weg von dem Sender angepasst werden kann.

6. Verfahren nach einem vorgehenden Anspruch, wobei der Schätzwert des Kurses des Körpers (50) auf einem Signal basiert, das von einem am Körper (50) vorgesehenen Kurssensor empfangen wird.

7. Verfahren nach Anspruch 6, wobei das Signal von dem Kurssensor weiterhin Informationen über die Geschwindigkeit des Körpers (50) umfasst und wobei das Verfahren das Bestimmen umfasst, ob die unter Verwendung des Schätzwerts des Kurses des Körpers (50) und der jeweiligen Doppler-Messung erhaltene geschätzte Geschwindigkeit des Körpers (50) mit dem Signal übereinstimmt, das entlang eines direkten Wegs vom Sender (60,62) empfangen worden ist, durch Vergleichen der geschätzten Geschwindigkeit des Körpers (50), die unter Verwendung des Schätzwerts des Kurses des Körpers (50) und der jeweiligen Doppler-Messung erhalten wurde mit den von dem Kurssensor erhaltenen Informationen über die Geschwindigkeit des Körpers (50).

8. Verfahren nach einem vorgehenden Anspruch, umfassend das Erhalten des Schätzwerts des Kurses des Körpers (50) unmittelbar nach dem Bestimmen, dass der Körper (50) sich zu bewegen begonnen hat, nachdem er als stationär bestimmt worden ist.

9. Verfahren nach einem vorgehenden Anspruch, das weiterhin Folgendes umfasst:

   Verhindern eines zukünftigen Verfolgens von ignorierten Signalen.

10. Verfahren nach einem vorgehenden Anspruch, das weiterhin Folgendes umfasst:

    Verwenden von Messungen von den Signalen, die nicht ignoriert sind, zum Aktualisieren einer Positions-/Geschwindigkeits-/Zeitlösung für den Körper (50).

11. Verfahren nach einem vorgehenden Anspruch, wobei der Kurssensor einen Kreisel mit einer bekannten Positionsbeziehung zum Körper (50) zum Anzeigen einer Orientierung des Körpers (50) umfasst.

**12.** Verfahren nach Anspruch 11, wobei der Kurssensor weiterhin einen Temperatursensor zum Kalibrieren einer Ausgabe des Kreisels umfasst.

**13.** Verfahren nach Anspruch 10 oder 11, weiterhin umfassend einen Beschleunigungsmesser zum Anzeigen einer Bewegungsrichtung des Körpers (50).

**14.** Verfahren nach einem der Ansprüche 1 bis 10, wobei der Kurssensor ein Magnetometer zum Anzeigen einer Bewegungsrichtung des Körpers (50) umfasst.

**15.** Positionierungssystem, das Folgendes umfasst:

einen Kurssensor (16) zum Generieren eines Schätzwerts des Kurses eines Körpers (50), dessen Position oder Geschwindigkeit geschätzt werden soll;
einen Empfänger (22) zum Detektieren von Signalen von mehreren Sendern (60, 62); und
einen Prozessor (28, 36), der konfiguriert ist zum Durchführen eines Verfahrens nach einem der Ansprüche 1 bis 14.

**Revendications**

**1.** Procédé de mise en fonctionnement d'un système de positionnement, le procédé consistant à :

obtenir une estimée du cap, par rapport à certains, respectifs d'une pluralité d'émetteurs, d'un corps (50) dont la position ou la vitesse doit être estimée (148) ;
poursuivre des signaux respectifs (70, 72, 74, 76) provenant de la pluralité d'émetteurs (60, 62) ;
obtenir une mesure Doppler respective à partir de chacun desdits signaux poursuivis (70, 72, 74, 76) ;
pour chacun desdits signaux poursuivis (70, 72, 74, 76), estimer une vitesse dudit corps dans la direction de son cap en utilisant l'estimée du cap du corps (50) et la mesure Doppler (150) respective, et déterminer si la vitesse estimée du corps (50) est cohérente par rapport au signal ayant été reçu suivant un trajet direct en provenance de l'émetteur (60, 62) ; et
rejeter des signaux qui fournissent des informations, concernant la vitesse du corps (50), qui sont incohérents par rapport au signal ayant été reçu (152) suivant un trajet direct en provenance de l'émetteur (60, 62), lors de l'estimation de la position ou de la vitesse du port (50).

**2.** Procédé selon la revendication 1,
dans lequel la détermination du fait de savoir si la vitesse estimée du corps (50) est cohérente par rapport au signal ayant été reçu (152) suivant un trajet direct en provenance de l'émetteur (60, 62) consiste à déterminer si la vitesse estimée du corps suggère que le signal respectif a été obtenu en provenance de l'émetteur (60, 62) par l'intermédiaire d'une réflexion.

**3.** Procédé selon la revendication 1 ou 2,
dans lequel la détermination du fait de savoir si la vitesse estimée du corps (50) est cohérente par rapport au signal ayant été reçu (152) suivant un trajet direct en provenance de l'émetteur (60, 62) consiste à comparer la vitesse estimée du corps (50) dans la direction dudit cap estimé à une vitesse de seuil.

**4.** Procédé selon la revendication 3, dans lequel la vitesse de seuil est nulle, de sorte qu'il est déterminé que la vitesse estimée du corps (50) n'est pas cohérente par rapport au signal ayant été reçu suivant un trajet direct en provenance de l'émetteur (60, 62) si la vitesse estimée du corps (50) dans la direction dudit cap estimé est négative.

**5.** Procédé selon la revendication 3, dans lequel la vitesse de seuil est adaptable en fonction de l'angle entre le cap estimé du corps (50) dont la position ou la vitesse doit être estimée et le trajet direct en provenance de l'émetteur.

**6.** Procédé selon l'une quelconque des revendications précédentes, dans lequel l'estimée du cap du corps (50) est basée sur un signal reçu en provenance d'un capteur de cap prévu sur le corps (50).

**7.** Procédé selon la revendication 6, dans lequel le signal provenant du capteur de cap comprend en outre des informations concernant la vitesse du corps (50), et dans lequel le procédé consiste à déterminer si la vitesse estimée du corps (50), obtenue en utilisant l'estimée du cap du corps (50) et la mesure Doppler respective, est cohérente par rapport au signal ayant été reçu suivant un trajet direct en provenance de l'émetteur (60, 62) en comparant ladite vitesse estimée dudit corps (50), obtenue en utilisant l'estimée du cap du corps (50) et la mesure Doppler respective, aux informations concernant la vitesse du corps (50), obtenues en provenance du capteur de cap.

**8.** Procédé selon l'une quelconque des revendications précédentes, consistant à obtenir l'estimée du cap du corps (50) immédiatement après avoir déterminé que le corps (50) a commencé à se déplacer après qu'il a été déterminé qu'il était stationnaire.

**9.** Procédé selon l'une quelconque des revendications précédentes, consistant en outre à :

éviter une poursuite future de signaux rejetés.

**10.** Procédé selon l'une quelconque des revendications précédentes, consistant en outre à :

utiliser des mesures provenant des signaux qui ne sont pas rejetés afin de mettre à jour une solution de position/vitesse/temps pour le corps (50).

**11.** Procédé selon l'une quelconque des revendications précédentes, dans lequel le capteur de cap comprend un gyroscope, présentant une relation de position connue par rapport au corps (50), pour indiquer une orientation du corps (50).

**12.** Procédé selon la revendication 11, dans lequel le capteur de cap comprend en outre un capteur de température pour étalonner une sortie du gyroscope.

**13.** Procédé selon la revendication 10 ou 11, comprenant en outre un accéléromètre pour indiquer une direction de mouvement du corps (50).

**14.** Procédé selon l'une quelconque des revendications 1 à 10, dans lequel le capteur de cap comprend un magnétomètre pour indiquer une direction de mouvement du corps (50).

**15.** Système de positionnement, comprenant :

un capteur de cap (16) pour générer une estimée du cap d'un corps (50) dont la position ou la vitesse doit être estimée ;
un récepteur (22) pour détecter des signaux provenant d'une pluralité d'émetteurs (60, 62) ; et
un processeur (28, 36), configuré pour mettre en oeuvre un procédé selon l'une quelconque des revendications 1 à 14.

Fig. 1

Fig. 2(a)

Fig. 2(b)

Fig. 3

Fig. 4

Fig. 5

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 7702459 B

**Non-patent literature cited in the description**

• Road ortho-image generation based on accurate vehicle trajectory estimation by GPS Doppler. **JUN-ICHI MEGURO et al.** Intelligent Vehicles Symposium (IV). IEEE, 03 June 2012, 276-281